# EUROPEAN PATENT SPECIFICATION

(11) **EP 2 774 232 B1**
(45) Date of publication and mention of the grant of the patent: **14.09.2016**
(21) Application number: 12788300.7
(22) Date of filing: 01.11.2012
(51) Int. Cl.: H02G 1/12, H01R 9/05, H01R 43/28

(54) **JIG FOR PROCESSING END OF WIRE AND METHOD FOR THE SAME**
VORRICHTUNG ZUM VERARBEITEN DER ENDEN VON DRÄHTEN UND VERFAHREN DAFÜR
GABARIT POUR TRAITER L'EXTRÉMITÉ D'UN FIL ET SON PROCÉDÉ DE FABRICATION

(30) Priority: 04.11.2011 JP 2011242046
(43) Date of publication of application: 10.09.2014
(73) Proprietor: Yazaki Corporation, Minato-ku Tokyo 108-8333 (JP)
(72) Inventor: ARAKI, Mamoru, Makinohara-shi Shizuoka 421-0407 (JP); TAKAHASHI, Katsunori, Makinohara-shi Shizuoka 421-0407 (JP)
(74) Representative: Grünecker Patent- und Rechtsanwälte PartG mbB
(86) International application number: PCT/JP2012/007008
(87) International publication number: WO 2013/065309

(56) References cited:
- US-A1- 2005 170 696
- US-A1- 2005 181 672

## Description

This invention relates to a jig for processing an end of an electric wire according to the preamble of independent claim 1 and a method for the same in order to open and strip an insulating cover at an end of a shielded electric wire, to expand a conductive braided wire disposed inside of the insulating cover, and to wrap the braided wire with a tape. Such a jig for processing an end of an electric wire can be taken from the prior art document US 2005/181672 A1.

Conventionally, when stripping a synthetic-resin-made insulating cover (sheath or outer skin) disposed outside of an end of an electric wire, for example, firstly, a slit in the insulating cover in a longitudinal direction of the electric wire is made using a first cutter, and next, a slit in the insulating cover in a circumferential direction is made using a second cutter. Thus, the insulating cover is stripped off.

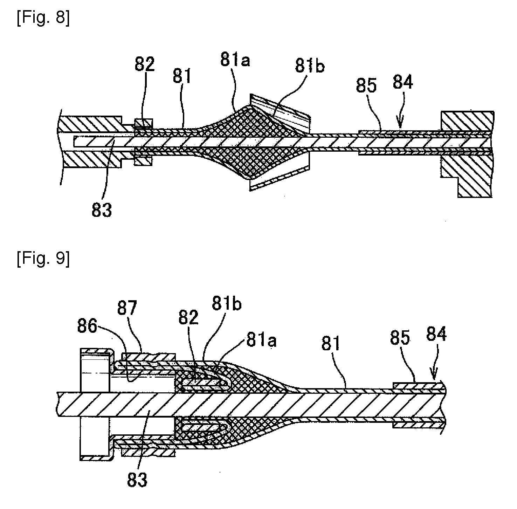

As shown in Fig. 8, for example, in PTL 1, it is described that an insulating cover 85 at the outermost layer of an end of a shielded electric wire 84 is stripped to expose a conductive braided wire 81 disposed inside of the insulating cover 85. Then, a tip of the braided wire 81 is wrapped with an adhesive tape 82 to prevent the tip of the braided wire 81 from coming apart. Next, the tip wrapped with the adhesive tape of the braided wire 81 is slid in the longitudinal direction of the electric wire along an insulating cover (inner skin) of two electric wire 83 disposed inside and having a small radius to expand a middle portion in a longitudinal direction of the braided wire 81 outward into substantially a circular chevron shape (denoted by reference sign 81a). Then, as shown in Fig. 9, the tip of the braided wire 81 is slid into an inside of a substantially cup-shaped expanded portion 81b of the braided wire 81 to overlap doubly an inside and outside of the braided wire 81.

As shown in Fig. 9, an overlapped portion of the braided wire 81 is held and fixed between an inside grounding fitting 86 and an outside ring-shaped fitting 87. The fitting 86 is connected and fixed to a device with a not-shown bracket.

### [Citation List]

### [Patent Literature]

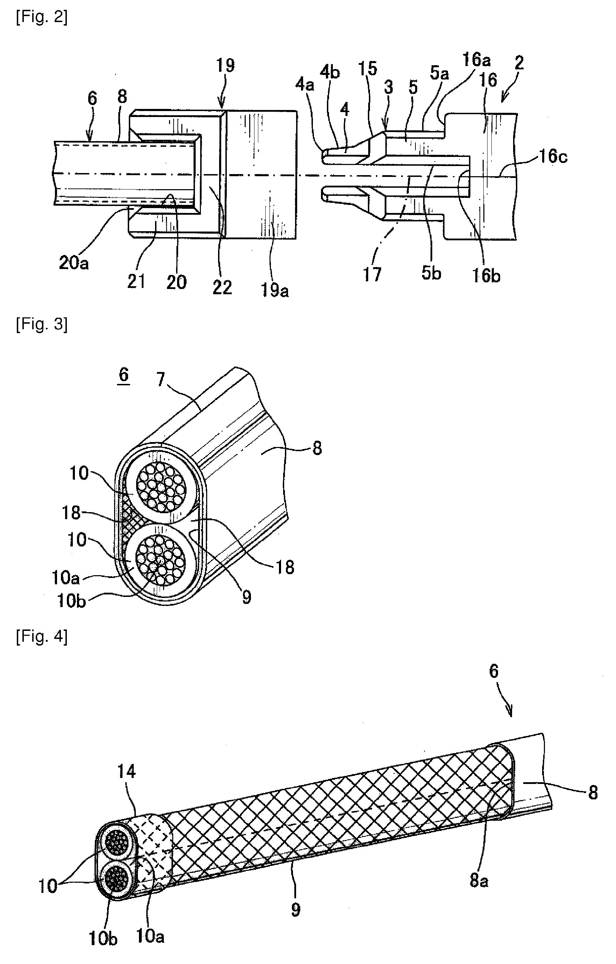

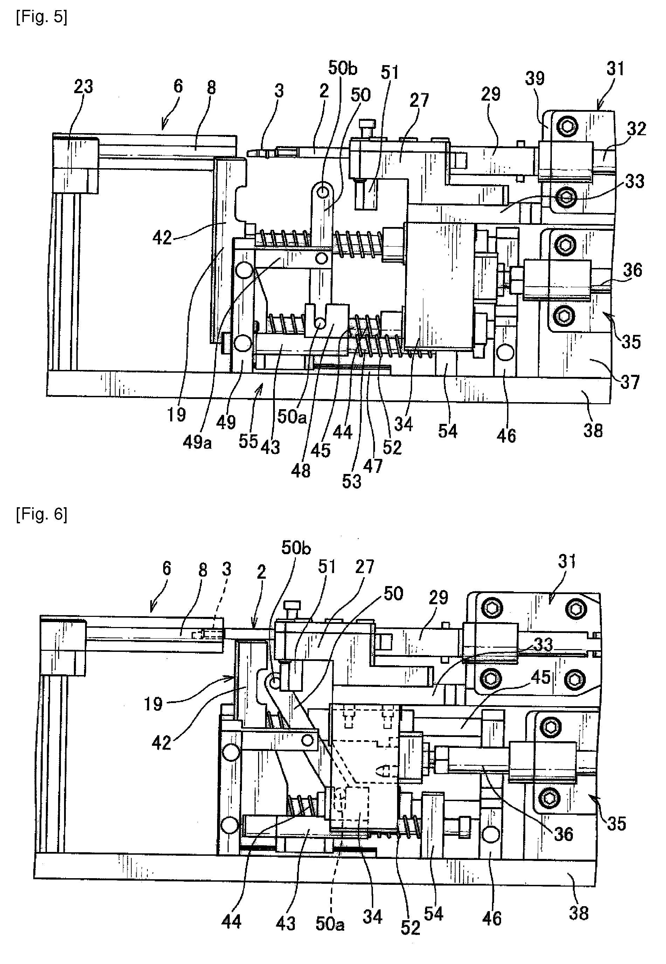

[PTL 1] JP, A, 2010-15816 (Figs. 2 and 5)

### [Summary of Invention]

### [Technical Problem]

When the end of the insulating cover (sheath or outer skin) of the shielded wire, conventionally, a process is used in which while a slit is made in a longitudinal direction from a tip of the insulating cover 85, for example, a pincer-shaped hand tool is inserted into an inside of the insulating cover 85 at an end of the shielded electric wire 84 to open the tip of the insulating cover 85 outward. Then, the insulating cover 85 is stripped in the longitudinal direction of the electric wire from the opening. Next, a-wedge-shaped jig bar is inserted into between an inner insulating cover of the electric wire 83 having a small radius and an outer conductive braided wire 81 to expand a radius of the tip of the braided wire 81 outward. In this condition, an outer peripheral wall of the tip of the braided wire 81 is wrapped with the adhesive tape 82 to prevent the tip of the braided wire 81 from coming apart.

After wrapping the tip of the braided wire 81 with the adhesive tape 82, the wedge-shaped jig bar is pulled out from between the inner electric wire 83 and the outer braided wire 81, and the tip of the braided wire 81 is maintained in a condition where the radius of the tip of the braided wire 81 is expanded. The reason why the outer peripheral wall of the tip of the braided wire 81 is wrapped with the adhesive tape 82 while the radius of the tip of the braided wire 81 is expanded is because in Fig. 8, the tip of the braided wire 81 can be easily slid with low frictional resistance along the insulating cover (inner skin) of the inner electric wire 83 in the longitudinal direction of the electric wire.

However, according to the above process, an operation to open the tip of the insulating cover (outer skin) 85 of the shielded electric wire 84 and an operation to expand the radius of the tip of the braided wire 81 and to wrap the braided wire 81 with the adhesive tape 82 are performed in different processes. Therefore, a movement of a product between processes (intermediate product of the shielded wire) is generated, and there is a problem that man-hours and production costs are increased.

In view of the above, an object of the present invention is to provide a jig for processing an end of an electric wire and a method for processing the end of the electric wire capable of reducing man-hours and production costs by performing an operation to open a tip of an insulating cover of a shielded wire and an operation to expand a radius of a tip of a braided wire and to wrap the braided wire with a tape in the same process so as to eliminate a movement of a product between processes (intermediate product).
According to the present invention said object is solved by a jig for processing an end of an electric wire having the features of independent claim 1. Moreover, said object is also solved by a method for processing an end of an electric wire having the features of claim 3. Preferred embodiments are laid down in the dependent claims.

According to a first aspect, there is provided a jig for processing an end of an electric wire including:
a pair of claw portions each having a slim portion at a front half and a wide portion at a rear half;
a first moving member configured to move the pair of claw portions back and forth so as to insert the slim portions into an inside of an insulating cover having a slit in a longitudinal direction of a shielded electric wire;
an opening member configured to open the pair of claw portions while the slim portions are inserted into the inside of the insulating cover; and
a second moving member configured to move the pair of claw portions back and forth so as to insert the slim portions and the wide portions into an inside of a braided wire of the shielded electric wire.

According to the above, the first moving member moves forward the pair of claw portions so that the slim portions at a tip side of the pair of claw portions are inserted into an inside of a tip of the insulating cover of the shielded electric wire. In this condition, the opening member opens outward the pair of claw portions so that the insulating cover is opened outward from the slit. An operator holds and strips the opened insulating cover backward along the braided wire. The first moving member moves the pair of claw portions backward, and then, the second moving member moves the pair of claw portions forward so that the slim portions and the wide portions at a base end side of the pair of claw portions are inserted into the inside of the braided wire, thereby the braided wire is expanded. In this condition, an outer peripheral wall of the tip of the braided wire is wrapped with a tape for preventing the braided wire from coming apart, and the tip (wrapped with a tape) of the braided wire becomes slidably with low frictional resistance along an electric wire disposed inside of the braided wire.

According to a second aspect, there is provided the jig for processing an end of an electric wire as described in the first aspect, wherein the first moving member includes:
a first toggle lever;
a pair of link plates linked to the first toggle lever with a link member and to which the pair of claw portions is fixed; and
a guide member supporting the pair of link plates movably back and forth.

According to the above, when the operator operates the first toggle lever so as to move the pair of link plates forward along the guide member, the pair of claws are moved forward together with the pair of link plates, and the slim portions of the claws are inserted into the inside of the insulating cover of the shielded electric wire.

According to a third aspect, there is provided the jig for processing an end of an electric wire as described in the second aspect, wherein the second moving member includes:
a second toggle lever; and
a movable block linked to the second toggle lever and the guide member and supporting the first toggle lever.

According to the above, when the operator operates the second toggle lever so as to move forward the pair of claw portions together with the guide member and the first toggle lever via the movable block, the slim portions and the wide portions of the claw portions are inserted into the inside of the braided wire of the shielded electric wire, thereby the wide portions expand the braided wire in a radial direction.

According to a fourth aspect, there is provided the jig for processing an end of an electric wire as described in the second or third aspect,
wherein the opening member includes:
a pair of long holes provided on the pair of link plates;
a pair of first pins disposed at the guide member side and slidably engaged with the pair of long holes; and
a pair of second pins disposed more inside than the pair of first pins and linking
the link member with the pair of link plates.

According to the above, the pair of claw portions is moved forward and opened with an operation of the first toggle lever. Namely, after the pair of claws are moved forward together with the link plates, the link plates are projected forward from the guide member, and the link plates are opened outward together with the claw portions around the second pins disposed at an inner rear side and around the first pins disposed at an outer front side and engaged with the long holes.

According to a fifth aspect, there is provided the jig for processing an end of an electric wire as described in any one of the first to fourth aspects,
wherein when the pair of claw portions is moved forward, a positioning block supporting a tip of the shielded electric wire is moved backward by a third moving member to release the tip of the shielded electric wire.

According to the above, the tip of the shielded electric wire is correctly positioned and set on the positioning block. Then, when the claw portions are moved forward by the first moving member (upon open operation), or when the claw portions are moved forward by the second moving member, the positioning block is moved backward by the third moving member and separated from the tip of the shielded electric wire. Thereby, the operation of opening the insulating cover, the operation of expanding the braided wire, and the operation of wrapping the outer peripheral wall of the tip of the braided wire are smoothly performed without interrupting by the positioning block.

According to a sixth aspect, there is provided a method for processing an end of an electric wire including the steps of:
providing a pair of claw portions each having a slim portion at a front half and a wide portion at a rear half, and a shielded electric wire at an end of which insulating cover has a slit extended in a longitudinal direction;
opening the insulating cover by inserting a pair of the slim portions into an inside of a tip of the insulating cover, and by opening the pair of claw portions;
stripping the opened insulating cover along the slit in the longitudinal direction;
expanding the braided wire by inserting the wide portions into an inside of a tip of the braided wire of the shielded electric wire; and in this condition, wrapping the braided wire with a tape from an outside of the wide portions.

According to the above, in the same process using the pair of claw portions having the slim portions and the wide portions successively in the longitudinal direction, the operation of opening the insulating cover of the shielded electric wire, the operation of stripping the insulating cover along the braided wire, the operation of expanding the braided wire, and the operation of wrapping the expanded braided wire with a tape are sequentially performed.

### [Advantageous Effects of Invention]

According to the first aspect, the operation of opening the tip of the insulating cover of the shielded electric wire, the operation of expanding the radius of the tip of the braided wire, and the operation of wrapping the tip of braided wire with a tape can be performed in the same process (one jig for processing an end of an electric wire). Therefore, the movement of the product between the processes (intermediate product) becomes unnecessary, and the man-hours and the production costs can be reduced.

According to the second aspect, the slim portions of the pair of claw portions can be inserted into the inside of the insulating cover of the shielded electric wire by a manual operation of the first toggle lever without using a power source or a wiring.

According to the third aspect, the wide portions of the pair of claw portions can be inserted into the inside of the braided wire of the shielded electric wire and expand the braided wire by a manual operation of the second toggle lever without using a power source or a wiring.

According to the fourth aspect, the slim portions of the pair of claw portions can open the insulating cover of the shielded electric wire by opening the pair of claw portions by a manual operation of the first toggle lever without using a power source or a wiring.

According to the fifth aspect, positioning of the tip of the electric wire is correctly performed with the positioning block to increase an accuracy of inserting the claw portions. Further, when the claw portions are opened or the wide portions are inserted, the third moving member moves the positioning block backward so that the operation of opening the insulating cover, the operation of expanding the braided wire, and the operation of wrapping the braided wire with a tape are smoothly and surely performed without interrupting by the positioning block.

According to the sixth aspect, the operation of opening the tip of the insulating cover of the shielded electric wire, the operation of expanding the radius of the tip of the braided wire, and the operation of wrapping the tip of braided wire with a tape can be performed in the same process (one jig for processing an end of an electric wire). Therefore, the movement of the product between the processes (intermediate product) becomes unnecessary, and the man-hours and the production costs can be reduced.

### [Brief Description of Drawings]

[Fig. 1]

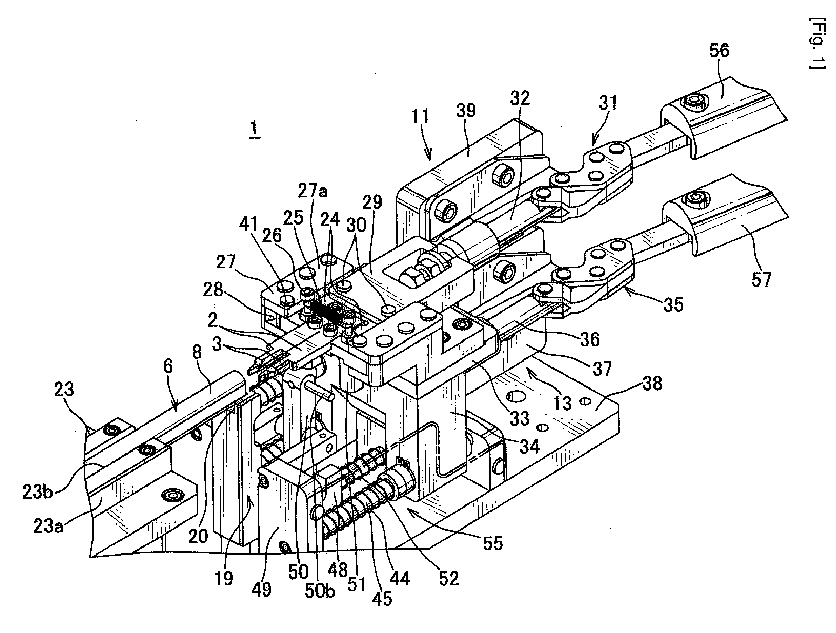

   Fig. 1 is a perspective view showing an embodiment of a jig for processing an end of an electric wire according to the present invention;
[Fig. 2]
   Fig. 2 is a plan view showing a pair of claw portions of the jig for processing an end of an electric wire and a shielded electric wire disposed on a positioning block.
[Fig. 3]
   Fig. 3 is a perspective view showing an embodiment of the shielded electric wire.
[Fig. 4]
   Fig. 4 is a perspective view showing an intermediate product of the shielded wire in which an insulating cover of the shielded wire is stripped and an exposed braided wire is wrapped with a tape.
[Fig. 5]
   Fig. 5 is a side view showing a main part of the jig for processing an end of an electric wire.
[Fig. 6]
   Fig. 6 is a side view showing an operation of the jig for processing an end of an electric wire.
[Figs. 7A to 7C]

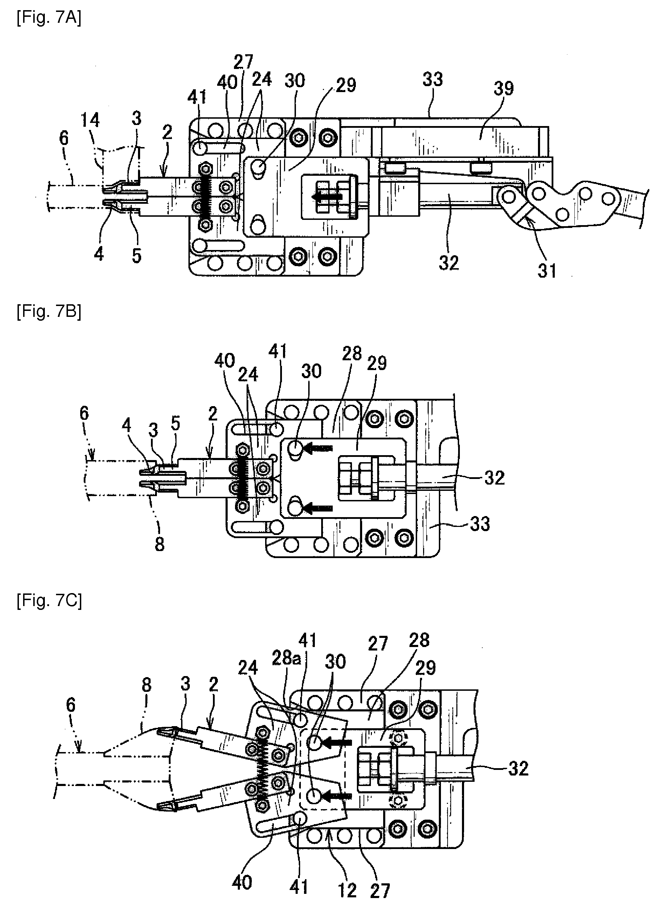

   Figs. 7A to 7C are a plan view showing sequentially an embodiment of a method for processing an end of an electric wire.
[Fig. 8]
   Fig. 8 is a longitudinal sectional view showing a process of a conventional method for processing an end of an electric wire.
[Fig. 9]
   Fig. 9 is a sectional view showing a shielded electric wire processed by the conventional method for processing an end of an electric wire.

### [Description of Embodiments]

Figs. 1 to 7C show an embodiment of a jig for processing an end of an electric wire and a method for processing an end of an electric wire according to the present invention.

As shown in Fig. 1, this jig for processing an end of an electric wire 1 includes: a left and right pair of claw members 2; a first moving member 11 for shallowly inserting a pair of claw portions 3 at a tip side of the pair of claw members 2 into an inside of an insulating cover (outer skin) 8 as an outermost layer having a slit 7 (Fig. 3) in a longitudinal direction at an end of a shielded electric wire 6 (accurately, an inside of a conductive braided wire 9 (Fig. 3) at an inside of the insulating cover 8); an opening member 12 (Fig. 7C) for opening the insulating cover 8 outward by opening the pair of claw members 2 while the pair of claw portions 3 are shallowly inserted into the inside of the insulating cover 8; and a second moving member 13 allowing an adhesive tape 14 (Fig. 4) to wrap around an outer peripheral wall of a tip of the braided wire 9 under a condition that the braided wire 9 is expanded (opened) outward in a radial direction by deeply inserting the left and right pair of claw portions 3 into between two upper and lower electric wires 10 (Fig. 3) having a small radius at the inside of the conductive braided wire 9 disposed outside of the electric wires 10 at an inside of the shielded electric wire 6 after the pair of claw members 2 is pulled out of the shielded electric wire 6, and the insulating cover 8 is stripped.

As shown in Fig. 2, each of the claw portions 3 at the tip side of the left and right pair of claw members 2 is composed of a slim portion 4 at a tip side (front half) and a wide portion 5 at a base end (rear half). A tapered guide wall 15 is disposed between the slim portion 4 and the wide portion 5. (The slim portion 4 and the wide portion 5 are smoothly continued to each other with an outside tapered guide wall 15.) The slim portion 4 is formed thinner than the wide portion 5 in a horizontal direction and in a vertical direction. (The wide portion 5 is formed thicker than the slim portion 4 in the horizontal direction and in the vertical direction.)

A tip 4a of the slim portion 4 is smoothly pointed in a substantially arc shape, and an outer wall 4b of the slim portion 4 is slightly tapered to a front end of the guide wall 15. The wide portion 5 is formed in a uniform thickness in a longitudinal direction except the front end guide wall 15. A base end of the wide portion 5 is integrally continued to a base portion 16 which is wider than the wide portion 5. An inner wall 5b of the wide portion 5 is perpendicular to a step wall 16b at an inner front end of the base portion 16. The inner step wall 16b is positioned more behind than an outer step wall 16a. The inner wall 5b of the wide portion 5 is extended more behind than the outer wall 5a. The claw member 2 is composed of the claw portions 3 and the base portions 16.

While the pair of claw portions 3 is closed, a gap 17 exists between the pair of claw portions 3. While a pair of base portions 16 is closed, inner side walls 16c are in absolute contact with each other. The gap 17 between the pair of claw portions 3 is set in a size allowing the pair of claw portions 3 to be inserted into a gap 18 between the upper and lower pair of electric wires 10 having a small radius at an inside of the shielded electric wire 6 of Fig. 3 (a size not to interfere with the electric wires 10).

As shown in Figs. 1 and 2, a tip of the shielded electric wire 6 is positioned and arranged in a groove 20 at an upper end of a vertical positioning block 19 in front of the pair of claw portions 3. As shown in Fig. 2, the groove 20 is surrounded at three sides by left and right walls 21 and a rear wall 22, and has a tapered front opening 20a for guiding forward and horizontally the shielded electric wire 6. In Fig. 2, the reference sign 19a denotes a lower half of the positioning block 19 projected backward.

As shown in Fig. 1, a wire-guide member 23 is horizontally arranged in front of the positioning block 19. A middle part in a longitudinal direction of the shielded electric wire 6 is supported by the wire-guide member 23, and the tip of the shielded electric wire 6 is supported by the positioning block 19. The wire-guide member 23 has a guide groove 23b between a left and right pair of guide walls 23a extended in a longitudinal direction of the shielded electric wire 6.

As shown in Fig. 3, the shielded electric wire 6 used in the jig for processing an end of an electric wire 1 of this embodiment is a high voltage two core electric wire made by covering two upper and lower electric wires parallel to each other composed of a conductive core wire 10b and an insulating cover (inner skit) 10a with a conductive braided wire 9 in an oval sectional shape, and by covering an outside of the braided wire 9 in the oval sectional shape with an insulating cover (sheath or outer skin) 8 as an outermost layer.

A straight slit 7 extended in a longitudinal direction of the shielded electric wire 6 is previously provided on one short side of the insulating cover (outer skin) 8 from a tip to a middle part of the insulating cover 8 in the longitudinal direction with a not-shown cutter in a previous process. The shielded electric wire 6 provided with the slit 7 is arranged and set on the wire-guide member 23 in Fig. 1 and on the positioning block 19 in a manner that each short side of the shielded electric wire 6 provided with the slit 7 is disposed upward or downward (preferably, the short side provided with the slit 7 is disposed downward for striping).

As shown in Fig. 3, a left and right pair of substantially triangle shaped gaps 18 are formed between an outer face of the insulating cover (inner skin) 10a and an inner face of the outer braided wire 9 in between the upper and lower pair of electric wires 10 of the shielded electric wire 6. The claw portions 3 of the left and right pair of claw members 2 in Figs. 1 and 2 are inserted into these left and right pair of gaps 18. The first moving member 11 of Fig. 1 inserts the slim portions 4 (Fig. 2) at a front half of the claw portions 3 into the gaps 18, and the opening member 12 of Fig. 7 opens the claw portions 3 outward, thereby the insulating cover (outer skin) 8 as the outermost layer is opened outward together with the braided wire 9.

An outer width in a horizontal direction between tips of the slim portions 4 at the front half of the pair of claw portions 3 of Fig. 2 is smaller than a shorter diameter (inner diameter) of the braided wire 9 of Fig. 3. An outer width in a horizontal direction between the wide portions 5 at the rear half of the pair of claw portions 3 is larger than the shorter diameter (inner diameter) of the braided wire 9. Further, an outer width in a vertical direction between the wide portions 5 at the rear half of the claw portions 3 is larger than the gap 18 in the vertical direction between outer faces of the insulating covers 10a of the upper and lower pair of electric wires 10 of Fig. 3.

Incidentally, because the insulating cover (outer skin) 8 is previously provided with the slit 7 (Fig. 3) in the longitudinal direction of the electric wire, a certain size of a gap (not shown) in a radial direction is generated between the braided wire 9 and the insulating cover 8. Therefore, the tips 4a of the pair of claw portions 3 may be inserted into the gap. However, when the insulating cover (outer skin) 8 is in contact with the braided wire 9, this insertion operation is difficult. As described above, it is more sure to insert the claw portions 3 into the left and right gaps 18 between the insulating covers 10a of the upper and lower pair of electric wires 10 and the braided wire 9 and to expand the insulating cover (outer skin) 8 outward together with the braided wire 9.

While the pair of claw portions 3 opens the tip of the insulating cover (outer skin) 8, when the operator holds the opened tip of the insulating cover 8 by hand and pulls forward in the longitudinal direction of the electric wire in Fig. 1, the insulating cover 8 is stripped off from the braided wire 9 and the braided wire 9 is exposed. The insulating cover 8 stripped off from the braided wire 9 is cut in a circumferential direction by a not-shown cutter (a cutting position in the circumferential direction is denoted by reference sign 8a in Fig. 4).

Next, when the left and right pair of claw portions 3 of Fig. 2 is inserted into the left and right gaps 18 of the shielded electric wire 6 of Fig. 3 (the insulating cover 8 is already removed) to a root side of the wide portion 5 at the rear half (the claw portions 3 does not open outward), the braided wire 9 is expanded left and right by the wide portions 5 of the claw portions 3, and the upper and lower pair of electric wires 10 is pressed in a direction separating up and down by the wide portions 5 of the claw portions 3 so that the braided wire 9 is also expanded in the vertical direction. In this condition (a condition that the claw portions 3 are inserted), as shown in Fig. 4, the adhesive tape 14 is wrapped around an outer peripheral wall at the tip of the braided wire 9 from an outside in a radial direction of the wide portion 5 so as to prevent the tip of the braided wire 9 from coming apart. The claw portions 3 are inserted into the braided wire 9 to the outer step walls 16a (Fig. 2) and while the outer step wall 16a knocks on the tip of the braided wire 9, an operation to wrap the braided wire 9 with the tape 14 is performed manually.

In Fig. 4, because the tape 14 is closely attached to the outer peripheral wall at the tip of the braided wire 9, an inner diameter of the tape 14 is equal to an outer diameter of the tip of the braided wire 9. Because the tip of the braided wire 9 is expanded, a shorter diameter of the tip of the braided wire 9 having an oval sectional shape is larger than an outer diameter of the insulating cover (inner skin) 10a of the inner electric wire 10, and a longer diameter of the tip of the braided wire 9 is more than twice the outer diameter of the insulating cover (inner skin) 10a of the inner electric wire 10 (outer diameters of two electric wires). Therefore, the tip (tape wrapping portion) of the braided wire 9 is smoothly slid with low frictional resistance along the inner electric wire 10 in the longitudinal direction of the electric wire 10, and a conventional folding operation of the braided wire 9 shown in Figs. 8 and 9 can be smoothly performed.

Hereinafter, a configuration of the jig for processing an end of an electric wire 1 will be explained in detail.

In Fig. 1, the left and right pair of claw portions 3 is respectively fixed to a left and right **pair** of link plates 24 movably in a back and forth direction and in an open and close direction. The pair of link plates 24 is pressed in a close direction of the claw portions 3 by an extension coil spring (elastic member) 25 extended horizontally (each end of the extension coil spring 24 is fixed to a vertical supporting column 26 of each link plate 24).

Outer ends of the pair of link plates 24 are slidably in a back and forth direction engaged with horizontal grooves 28 of a left and right pair of guide members 27 of a fixing side. Rear portions of the link plates 24 are rotatably in a horizontal direction coupled to a horizontal upper coupling member 29 with vertical second pins 30. The coupling member 29 is coupled to a horizontal shaft 32 of an upper (first) toggle lever 31. The left and right pair of guide members 27 is fixed to a lower horizontal coupling member 33, and a front half of the lower coupling member 33 is fixed to a lower vertical movable block 34.

As shown in Figs. 1 and 5, a horizontal shaft 36 of a lower (second) toggle lever 35 is coupled to the movable block 34. The lower toggle lever 35 is fixed to a lower vertical plate 37. The vertical plate 37 is fixed to a lower horizontal base plate 38. The upper toggle lever 31 is fixed to a rear extension of the lower coupling member 33 via an upper vertical plate 39.

According to this configuration, the upper toggle lever 31, the upper coupling member 29, the pair of link plates 24, and the pair of claw members 2 are integrally movable back and forth with an operation of the lower toggle lever 35. The upper toggle lever 31 can move the pair of claw members 2 back and forth independently from the lower toggle lever 35.

The first moving member 11 is composed of the upper toggle lever 31 in Fig. 1, the upper coupling member 29, the pair of guide members 27, and the pair of link plates 24. The second moving member 13 is composed of the lower toggle lever 35, the movable block 34, and the lower coupling member 33. The opening member 12 is composed of long holes 40 (Figs. 7A to 7C) of the pair of link plates 24, first pins 41 of the guide members 27 engaged with the long holes 40, and the second pins 30 coupling the pair of link plates 24 and the upper coupling member 29.

As shown in Fig. 5, the positioning block 19 positioning and supporting the tip of the shielded electric wire 6 is formed in a substantially L-shape, and composed of a vertical supporting column 42 and a lower horizontal slide portion 43. The supporting column 42 is pushed forward by an upper and lower pair of compression coil springs (elastic members) 44. The coil springs 44 are arranged on an outer periphery of the horizontal shaft 45. A front end of the shaft 45 is fixed to the supporting column 42 of the positioning block 19. A rear end of the shaft 45 is fixed to a rear lower supporting column 46 extended vertically from and fixed to the base plate 38. The movable block 34 is fixed to the guide members 27 via the lower coupling member 33. A horizontal hole of the movable block 34 is engaged slidably back and forth with the shaft 45. A front end of the coil spring 44 is abutted on the supporting column 42, and a rear end of the coil spring 44 is abutted on the movable block 34.

The slide portion 43 of the positioning block 19 is slidably engaged with a horizontal straight guide member 47 fixed to the base plate 38. A receiving portion 48 is fixed and provided on an upper rear side of the slide portion 43. A middle part in a longitudinal direction of a vertical link bar (link) 50 is rotatably and pivotally supported by a horizontal portion 49a of an inverted L-shaped supporting column 49 extended vertically from the base plate 38. A horizontal pin 50a at a lower end of the link bar 50 is engaged slidably in a circumferential direction with a groove of the receiving portion 48. A horizontal pin 50b is provided projectingly on an upper end of the link bar 50. A driving pin 51 perpendicular to a front lower wall of the one (left) link plate 24 to which the one (left) claw member 2 is fixed is provided projectingly opposite to a rear side of the upper horizontal pin 50b.

Further, the horizontal slide portion 43 of the positioning block 19 is pushed forward by a third compression coil spring 52. The compression coil spring 52 is arranged on an outer periphery of a horizontal guide shaft 53 projected backward from the slide portion 43. A rear end of the guide shaft 53 slidably penetrates a supporting column 54 extended vertically from the base plate 38. A rear end of the compression coil spring 52 is abutted on the supporting column 54. The third moving member 55 is composed of the positioning block 19, the link bar 50 having the upper and lower pins 50a, 50b, the link plates 24, the driving pin 51, the compression coil springs 44, 52, and the guide shafts 45, 53.

According to the above configuration, as shown in Figs. 5 and 6, when the pair of claw members 2 is moved forward and inserted into an inside of the shielded electric wire 6 from the tip of the shielded electric wire 6 with an operation of the upper toggle lever 31, the driving pin 51 disposed at a lower side of the pair of link plates 24 pushes forward the upper pin 50a of the link bar 50 so as to rotate the link bar 50 in a counterclockwise direction. Then, the lower pin 50a of the link bar 50 is moved backward and pushes backward the slide portion 43 of the positioning block 19, thereby the positioning block 19 is moved backward.

Thereby, the supporting column 42 of the positioning block 19 is separated backward from the tip of the shielded electric wire 6. In this condition, the pair of claw portions 3 is inserted into the inside of the tip of the shielded electric wire 6. Thus, an operation of opening outward the insulating cover 8 of the shielded electric wire 6 with the pair of claw portions 3 (first process) can be smoothly and surely performed without a restriction by the groove 20 (Fig. 1) of the positioning block 19.

Further, after the operation of opening the insulating cover 8, the insulating cover 8 is moved backward with an operation of releasing the upper toggle lever 31 (as shown in Fig. 5, the upper and lower toggle levers 31, 35 are arranged parallel to each other in a vertical direction), and then the pair of claw portions 3 is moved forward together with the upper toggle lever 31 with an operation of the lower toggle lever 35 so as to insert into the inside of the tip of the shielded electric wire 6. Thereby, the braided wire 9 (Fig. 3) is opened and an operation of wrapping around the braided wire 9 with the tape 14 (Fig. 4) is performed. At this time also, the driving pin 51 disposed at a lower side of the pair of link plates 24 pushes forward the upper pin 50a of the link bar 50 so as to rotate the link bar 50 in a counterclockwise direction. Then, the lower pin 50a of the link bar 50 is moved backward and pushes backward the slide portion 43 of the positioning block 19, thereby the positioning block 19 is moved backward. Thereby, an operation of opening the braided wire 9 and wrapping the outer periphery of the tip of the braided wire 9 with the tape 14 can be smoothly and surely performed without an interruption of the positioning block 19.

As shown in Figs. 7A to 7C, the slit-shaped long holes 40 extended in a back and forth direction are respectively provided on outer ends of the link plates 24. The vertical fixed first pins 41 at tips of the guide members 27 are respectively and slidably engaged with the long holes 40. The second pins 30 at a front end of the coupling member 29 are arranged more inside than the fixed first pins 41 in a left and right direction at a rear side of the link plates 24. Incidentally, in Figs. 7A to 7C, upper cover walls 27a of the guide members 27 are removed.

Then, as shown in Figs. 1 and 7A, while an operating portion 56 of the upper toggle lever 31 is extended backward in an extension direction of the shaft 32, the pair of claw portions 3 is closed and moved backward along the guide members 27 together with the link plates 24 and the coupling member 29. The first pins 41 at front ends of the guide members 27 are positioned at front ends of the long holes 40 of the link plates 24. Incidentally, the shielded electric wire 6 engaged with the pair of claw portions 3 shown in Fig. 7A is in a later-described second process (the operation of expanding and wrapping the braided wire 9 with the tape 14) for convenience shake. In the first process (the operation of opening the insulating cover 8), the tip of the shielded electric wire 6 is separated forward from the pair of claw portions 3 as shown in Fig. 1.

From a condition that the tip of the shielded electric wire 6 is positioned in front of the pair of claw portions 3 in the first process, when the operating portion 56 (Fig. 1) of the upper toggle lever 31 is rotated forward in a virtual horizontal plane, as shown in Fig. 7B, the shaft 32 of the toggle lever 31 and the upper coupling member 29 are moved forward, and the pair of link plates 24 is moved forward together with the pair of claw portions 3 (the pair of claw members 2) along the guide members 27 and the first pins 41. The first pins 41 are positioned at rear ends of the long holes 40 of the link plates 24. Then, the slim portions 4 at the front half of the pair of claw portions 3 are inserted into the substantially triangular shaped left and right pair of gaps 18 between the upper and lower pair of electric wires 10 of the shielded electric wire 6 in Fig. 3 along an inner side wall of the braided wire 9.

From this condition, as shown in Fig. 7C, when the operating portion 56 of the upper toggle lever 31 is fully rotated forward on the virtual horizontal plane (the rotating operation of the toggle lever 31 is performed continuously), the shaft 32 of the toggle lever 31 and the coupling member 29 are moved further forward, and the pair of link plates 24 are opened outward together with the pair of claw portions 3 (claw members 2) about the left and right second pins 30 disposed inside and at the rear side of link plates 24 (at the front end of the coupling member 29) along tapered walls 28a at front ends of the grooves 28 of the guide members 27. The slim portions 4 at the front half of the pair of claw portions 3 open outward the insulating cover (outer skin) 8 together with the braided wire 9 (it is also possible that the insulating cover 8 is opened outward independently from the braided wire 9).

Next, when the upper toggle lever 31 is rotated backward to a condition shown in Fig. 7A, the claw portions 3 are closed in an order of Fig. 7C, Fig. 7B, and Fig. 7A and moved backward together with the coupling member 29 and the link plates 24. The operator holds the opened tip of the insulating cover 8 with fingers or the like, and pulls forward in the longitudinal direction of the shielded electric wire 6 so as to strip the insulating cover 8 from the braided wire 9. The insulating cover 8 separated from the braided wire 9 is cut in a circumferential direction as shown in Fig. 4 with a not-shown pair of cutters, and removed from the shielded electric wire 6. The cutters for cutting in the circumferential direction and a driving member for driving the cutters are disposed on a forward extension of the horizontal base plate 38 in Fig. 1.

Next, when the operating portion 56 of the lower toggle lever 35 (Fig. 1) is fully rotated forward on the virtual horizontal plane from a condition shown in Fig. 7A, the pair of claw portions 3 is moved forward together with the upper toggle lever 31, the guide members 27, the braided wire 9, and the link plates 24. Then, the pair of claw portions 3 is inserted from the slim portions 4 to the base ends (root sides) of the wide portions 5 into the left and right pair of gaps (spaces) 18 at an inside of the braided wire 9 of the shielded electric wire 6 in Fig. 3 so that the braided wire 9 is opened outward. In this condition, as shown in Fig. 4, the tape 14 is wrapped around the outer periphery of the tip of the braided wire 9.

Next, when the lower toggle lever 35 is rotated backward (released), the pair of claw portions 3 is pulled out of the inside of the braided wire 9 of the shielded electric wire 6. Because the tape is wrapped while the braided wire 9 is expanded, the tip (tape wrapping portion) of the braided wire 9 can be smoothly moved forward along the inside two electric wires 10, and the fold of the braided wire 9 like the prior art (Figs. 8 and 9) can be performed.

Because the operations of the upper and lower toggle levers 31, 35 are performed manually by the operator, the power source or the wiring is unnecessary. Therefore, in a foreign country having a different environment of using the voltage or the like, the operation of the jig for processing an end of an electric wire 1 can be surely performed.

Incidentally, the above configuration of the present invention can also be used as the method of processing an end of an electric wire other than the jig for processing an end of an electric wire 1. Further, if the tips 4a of the pair of claw portions 3 are further sharpened than Fig. 2, the jig for processing an end of an electric wire 1 can be used in the operation of opening the insulating cover 8 and the braided wire 9 of the shielded electric wire having one electric wire not a pair of electric wires 10 at the inside of the braided wire 9.

The jig for processing an end of an electric wire and the method for processing an end of an electric wire can be used for reducing man-hours and production costs by performing an operation to open a tip of an insulating cover of a shielded wire and an operation to expand a radius of a tip of a braided wire and to wrap the braided wire with a tape in the same process and by eliminating a movement of a product between processes (intermediate product).

### [Reference Signs List]

1 jig for processing an end of an electric wire
3 claw portion
4 slim portion
5 wide portion
6 shielded electric wire
7 slit
8 insulating cover
9 braided wire
10 a pair of electric wires
11 first moving member
12 opening member
13 second moving member
14 tape 18 gap
19 positioning block
24 link plate
27 guide member
29 coupling member
30 second pin
31 upper (first) toggle lever
34 movable block
35 lower (second) toggle lever
40 long hole
41 first pin
55 third moving member

## Claims

1. A jig (1) for processing an end of a shielded electric wire (6) comprising two core electric wire made by covering two upper and lower electric wires (10) parallel to each other composed of a conductive core wire (10b) and an insulating cover (10a) with a conductive braided wire (9), and by covering an outside of the braided wire (9) with an insulating cover (8) as an outermost layer,
said insulating cover (8) has a slit (7) in a longitudinal direction of said shielded electric wire (6), and
said conductive braided wire (9) is in an oval sectional shape,
comprising:
a pair of claw portions (3) each having a slim portion (4) at a front half and a wide portion (5) at a rear half, the slim portion (4) is formed thinner than the wide portion (5) in a horizontal direction and in a vertical direction;
a first moving member (11) configured to move the pair of claw portions (3) back and forth, **characterized in that**
the first moving member (11) is configured to move the pair of claw portions (3) back and forth so as to insert the slim portions (4) into triangle shaped gaps (18) formed between an outer face of the insulating cover (10a) and an inner face of the outer braided wire (9) in between the upper and lower pair of electric wires (10) of the shielded electric wire (6),
an opening member (12) is configured to open the pair of claw portions (3) while the slim portions (4) are inserted into said triangle shaped gaps (18); and
a second moving member (13) is configured to move the pair of claw portions (3) back and forth so as to insert the slim portions (4) and the wide portions (5) into an inside of said braided wire (9) of the shielded electric wire (6), wherein
the first moving member (11) includes:
a first toggle lever (31);
a pair of link plates (24) linked to the first toggle lever (31) with a link member (29) and to which the pair of claw portions (3) is fixed; and
a guide member (27) supporting the pair of link plates (24) movably back and forth, and
the second moving member (13) includes:
a second toggle lever (35); and
a movable block (34) linked to the second toggle lever (35) and the guide member (27) and supporting the first toggle lever (31),wherein
the opening member (12) includes:
a pair of long holes (40) provided on the pair of link plates (24);
a pair of first pins (41) disposed at the guide member (27) side and slidably engaged with the pair of long holes (40); and
a pair of second pins (30) disposed more inside than the pair of first pins (41) and linking the link member (29) with the pair of link plates (24).

2. A jig for processing an end of an electric wire according to claim 1, **characterized in that** when the pair of claw portions (3) is moved forward, a positioning block (19) supporting a tip of the shielded electric wire (6) is moved backward by a third moving member (55) to release the tip of the shielded electric wire (6).

3. A method for processing an end of an electric wire comprising the steps of:
providing a shielded electric wire (6) as a high voltage two core electric wire made by covering two upper and lower electric wires (10) parallel to each other composed of a conductive core wire (10b) and an insulating cover (10a) with a conductive braided wire (9), and by covering an outside of the braided wire (9) with an insulating cover (8) as an outermost layer;
said conductive braided wire (9) is in an oval sectional shape;
providing a jig comprising:
a pair of claw portions (3) each having a slim portion (4) at a front half and a wide portion (5) at a rear half, the slim portion (4) is formed thinner than the wide portion (5) in a horizontal direction and in a vertical direction;
a first moving member (11) configured to move the pair of claw portions (3) back and forth;
said first moving member (11) is configured to move the pair of claw portions (3) back and forth so as to insert the slim portions (4) into triangle shaped gaps (18) formed between an outer face of the insulating cover (10a) and an inner face of the outer braided wire (9) in between the upper and lower pair of electric wires (10) of the shielded electric wire (6),
the insulating cover (8) has a slit (7) in a longitudinal direction of a shielded electric wire (6);
an opening member (12) is configured to open the pair of claw portions (3) while the slim portions (4) are inserted into said triangle shaped gaps (18); and
a second moving member (13) is configured to move the pair of claw portions (3) back and forth so as to insert the slim portions (4) and the wide portions (5) into an inside of a braided wire (9) of the shielded electric wire (6),
wherein the first moving member (11) includes:
a first toggle lever (31);
a pair of link plates (24) linked to the first toggle lever (31) with a link member (29) and to which the pair of claw portions (3) is fixed; and
a guide member (27) supporting the pair of link plates (24) movably back and forth, and
the second moving member (13) includes:
a second toggle lever (35); and
a movable block (34) linked to the second toggle lever (35) and the guide member (27) and supporting the first toggle lever (31), wherein
the opening member (12) includes:
a pair of long holes (40) provided on the pair of link plates (24);
a pair of first pins (41) disposed at the guide member (27) side and slidably engaged with the pair of long holes (40); and
a pair of second pins (30) disposed more inside than the pair of first pins (41) and linking the link member (29) with the pair of link plates (24);
opening the insulating cover (8) by inserting a pair of the slim portions (4) into the triangle shaped gaps (18), and by opening the pair of claw portions (3);
stripping the opened insulating cover (8) along the slit (7) in the longitudinal direction;
expanding the braided wire (9) by inserting the wide portions (5) into an inside of a tip of the braided wire of the shielded electric wire (6); and in this condition,
wrapping the braided wire (9)
with a tape from an outside of the wide portions (5).

## Patentansprüche

1. Montagevorrichtung (1) zum Bearbeiten eines Endes eines abgeschirmten Elektrokabels (6), das zwei Kern-Elektrokabel, gemacht durch Abdecken von zwei oberen und unteren Elektrokabeln (10), parallel zueinander, gebildet aus einem leitenden Kernkabel (10b) und einer Isolier-Abdeckung (10a), mit einem leitenden umflochtenen Kabel (9), und durch Abdecken einer Außenseite des umflochtenen Kabels (9) mit einer Isolier-Abdeckung (8) als eine äußerste Schicht, umfasst, diese Isolier-Abdeckung (8) hat einen Schlitz (7) in einer Längsrichtung von diesem abgeschirmten Elektrokabel (6), und dieses leitende umflochtene Kabel (9) ist in einer Oval-Querschnittsform,
die umfasst:
ein Paar von Klauen-Abschnitten (3), von denen jede einen Flach-Abschnitt (4) an einer vorderen Hälfte und einen Breit-Abschnitt (5) an einer hinteren Hälfte hat, der Flach-Abschnitt (4) ist dünner ausgebildet als der Breit-Abschnitt (5) in einer horizontalen Richtung und in einer vertikalen Richtung;
ein erstes Bewegungselement (11), das konfiguriert ist, um das Paar von Klauen-Abschnitten (3) zurück und vorzubewegen, **dadurch gekennzeichnet, dass** das erste Bewegungselement (11) konfiguriert ist, um das Paar von Klauen-Abschnitten (3) zurück und vorzubewegen, um so den Flach-Abschnitt (4) in dreiecksförmige Spalten (18) einzusetzen, die zwischen einer äußeren Fläche der Isolier-Abdeckung (10a) und einer inneren Fläche des äußeren umflochtenen Kabels (9), zwischen dem oberen und unteren Paar von Elektrokabeln (10) des abgeschirmten Elektrokabels (6), ausgebildet sind,
ein Öffnungselement (12), konfiguriert ist, um das Paar von Klauen-Abschnitten (3) zu öffnen, während die Flach-Abschnitte (4) in diese dreiecksförmigen Spalten (18) eingesetzt sind; und
ein zweites Bewegungselement (13), konfiguriert ist, um das Paar von Klauen-Abschnitten (3) zurück und nach vorne zu bewegen, um so die Flach-Abschnitte (4) und die Breit-Abschnitte (5) in ein Inneres von diesem umflochtenen Kabel (9) des abgeschirmten Elektrokabels (6) einzusetzen, wobei das erste Bewegungselement (11) beinhaltet:
einen ersten Kniehebel (31);
ein Paar von Verbindungsplatten (24), das zu dem ersten Kniehebel (31) mit einem Verbindungselement (29) verbunden, und mit dem Paar von Klauen-Abschnitten (3) fixiert ist; und
ein Führungselement (27), welches das Paar von Verbindungsplatten (24) bewegbar nach hinten und vorne lagert, und
das zweite Bewegungselement (13) beinhaltet:
einen zweiten Kniehebel (35); und
einen bewegbaren Block (34), der mit dem zweiten Kniehebel (35) und dem Führungselement (27) verbunden ist und den ersten Kniehebel (31) lagert, wobei das Öffnungselement (12) beinhaltet:
ein Paar von Langlöchern (40), die in dem Paar von Verbindungsplatten (24) vorgesehen sind;
ein Paar von ersten Stiften (41), die an der Führungselement (27) Seite positioniert sind und gleitend in das Paar von Langlöchern (40) eingreifen; und
ein Paar von zweiten Stiften (30), die weiter innerhalb als das Paar von ersten Stiften (41) positioniert sind und das Verbindungselement (29) mit dem Paar von Verbindungsplatten (24) verbinden.

2. Eine Montagevorrichtung zum Bearbeiten eines Endes eines Elektrokabels gemäß Anspruch 1, **dadurch gekennzeichnet, dass,** wenn das Paar von Klauen-Abschnitten (3) nach vorne bewegt ist, ein Positionierungsblock (19), der eine Spitze des abgeschirmten Elektrokabels lagert, nach hinten durch ein drittes Bewegungselement (55) bewegt ist, um die Spitze von dem abgeschirmten Kabel (6) zu lösen.

3. Ein Verfahren zum Bearbeiten eines Endes eines Elektrokabels, das die Schritte umfasst:
Vorsehen eines abgeschirmten Elektrokabels (6) als ein Hochspannungs-Zwei-Kern-Elektrokabel, gemacht durch Abdecken zwei oberer und unterer Elektrokabel (10) parallel zueinander, gebildet aus einem leitenden Kernkabel (10b) und einer Isolier-Abdeckung (10a) mit einem leitenden umflochtenen Kabel (9) und durch Abdecken einer Außenseite des umflochtenen Kabels (9) mit einer Isolier-Abdeckung (8) als eine äußerste Schicht;
dieses leitende umflochtene Kabel (9) ist in einer Oval-Querschnittsform;
Vorsehen einer Montagevorrichtung, die umfasst:
ein Paar von Klauen-Abschnitten (3), von denen jede einen Flach-Abschnitt (4) an einer vorderen Hälfte und einen Breit-Abschnitt (5) an einer hinteren Hälfte hat, der Flach-Abschnitt (4) ist dünner ausgebildet als der Breit-Abschnitt (5) in einer horizontalen Richtung und in einer vertikalen Richtung;
ein erstes Bewegungselement (11), das konfiguriert ist, um das Paar von Klauen-Abschnitten (3) zurück und vorzubewegen,
dieses erste Bewegungselement (11) ist konfiguriert, um das Paar von Klauen-Abschnitten (3) zurück und vorzubewegen, um so den Flach-Abschnitt (4) in dreiecksförmige Spalten (18) einzusetzen, die zwischen einer äußeren Fläche der Isolier-Abdeckung (10a) und einer inneren Fläche des äußeren umflochtenen Kabels (9), zwischen dem oberen und unteren Paar von Elektrokabeln (10) des abgeschirmten Elektrokabels (6), ausgebildet sind,
die Isolier-Abdeckung (8) hat einen Schlitz (7) in einer Längsrichtung von einem abgeschirmten Elektrokabel (6),
ein Öffnungselement (12), ist konfiguriert, um das Paar von Klauen-Abschnitten (3) zu öffnen, während die Flach-Abschnitte (4) in diese dreiecksförmigen Spalten (18) eingesetzt sind; und
ein zweites Bewegungselement (13), ist konfiguriert, um das Paar von Klauen-Abschnitten (3) zurück und nach vorne zu bewegen, um so die Flach-Abschnitte (4) und die Breit-Abschnitte (5) in ein Inneres von diesem umflochtenen Kabel (9) des abgeschirmten Elektrokabels (6) einzusetzen, wobei das erste Bewegungselement (11) beinhaltet:
einen ersten Kniehebel (31);
ein Paar von Verbindungsplatten (24), das zu dem ersten Kniehebel (31) mit einem Verbindungselement (29) verbunden, und mit dem Paar von Klauen-Abschnitten (3) fixiert ist; und
ein Führungselement (27), welches das Paar von Verbindungsplatten (24) bewegbar nach hinten und vorne lagert, und
das zweite Bewegungselement (13) beinhaltet:
einen zweiten Kniehebel (35); und
einen bewegbaren Block (34), der mit dem zweiten Kniehebel (35) und dem Führungselement (27) verbunden ist und den ersten Kniehebel (31) lagert, wobei das Öffnungselement (12) beinhaltet:
ein Paar von Langlöchern (40), die in dem Paar von Verbindungsplatten (24) vorgesehen sind;
ein Paar von ersten Stiften (41), die an der Führungselement (27) Seite positioniert sind und gleitend in das Paar von Langlöchern (40) eingreifen; und
ein Paar von zweiten Stiften (30), die weiter innerhalb als das Paar von ersten Stiften (41) positioniert sind und das Verbindungselement (29) mit dem Paar von Verbindungsplatten (24) verbinden;
Öffnen der Isolier-Abdeckung (8) durch Einsetzen eines Paars von den Flach-Abschnitten (4) in die dreiecksförmigen Spalten (18), und durch Öffnen des Paars von Klauen-Abschnitten (3);
Streifen der geöffneten Isolier-Abdeckung (8) entlang des Schlitzes (7) in die Längsrichtung;
Expandieren des umflochtenen Kabels (9) durch Einsetzen des Breit-Abschnittes (5) in ein Inneres der Spitze des umflochtenen Kabels (9) des abgeschirmten Elektrokabels (6); und in diesem Zustand,
Umwickeln des umflochtenen Kabels (9) mit einem Band von einer Außenseite der Breit-Abschnitte (5).

## Revendications

1. Gabarit (1) pour traiter une extrémité d'un câble électrique blindé (6) comprenant deux câbles électriques centraux, réalisé en recouvrant d'une tresse conductrice (9) deux câbles électriques supérieur et inférieur (10) parallèles entre eux constitués d'un câble conducteur central (10b) et d'un recouvrement isolant (10a), et en recouvrant d'un recouvrement isolant (8) en tant que couche la plus externe l'extérieur de la tresse (9),
ledit recouvrement isolant (8) comporte une fente (7) dans la direction longitudinale dudit câble électrique blindé (6), et
ledit câble conducteur tressé (9) possède une forme ovale en coupe,
une paire de parties de mâchoire (3) comportant chacune une partie mince (4) au niveau de la moitié avant et une partie large (5) au niveau de la moitié arrière, la partie mince (4) est formée de manière à être plus mince que la partie large (5) dans la direction horizontale et dans la direction verticale ;
un premier élément de déplacement (11) configuré pour déplacer dans un sens et dans l'autre la paire de parties de mâchoire (3), **caractérisé en ce que**
le premier élément de déplacement (11) est configuré pour déplacer dans un sens et dans l'autre la paire de parties de mâchoire (3) de façon à insérer les parties minces (4) dans des espaces en forme de triangle (18) formés entre la face externe du recouvrement isolant (10a) et la face interne de la tresse extérieure (9) entre les câbles de la paire supérieure et inférieure de câbles électriques (10) du câble électrique blindé (6),
un élément d'ouverture (12) est configuré pour ouvrir la paire de parties de mâchoire (3) tandis que les parties minces (4) sont insérées dans lesdits espaces en forme de triangle (18) ; et
un deuxième élément de déplacement (13) est configuré pour déplacer dans un sens et dans l'autre la paire de parties de mâchoire (3) de façon à insérer les parties minces (4) et les parties larges (5) à l'intérieur de ladite tresse (9) du câble électrique blindé (6), dans lequel
le premier élément de déplacement (11) comporte :
un premier levier basculant (31) ;
une paire de plaques de liaison (24) liée au premier levier basculant (31) au moyen d'un élément de liaison (29) et à laquelle est fixée la paire de parties de mâchoire (3) ; et
un élément de guidage (27) supportant de façon mobile dans un sens et dans l'autre la paire de plaques de liaison (24), et
le deuxième élément de déplacement (13) comporte :
un second levier basculant (35) ; et
un bloc mobile (34) lié au second levier basculant (35) et à l'élément de guidage (27) et supportant le premier levier basculant (31), dans lequel
l'élément d'ouverture (12) comporte :
une paire de longs trous (40) prévue sur la paire de plaques de liaison (24) ;
une paire de premières broches (41) disposée du côté de l'élément de guidage (27) et en prise de manière coulissante avec la paire de longs trous (40) ; et
une paire de secondes broches (30) disposée plus à l'intérieur que la paire de premières broches (41) et liant l'élément de liaison (29) avec la paire de plaques de liaison (24).

2. Gabarit (1) pour traiter une extrémité d'un câble électrique selon la revendication 1,
**caractérisé en ce que**, lorsque la paire de parties de mâchoire (3) est avancée, un bloc de positionnement (19) supportant une extrémité du câble électrique blindé (6) est reculé par un troisième élément de déplacement (55) pour libérer l'extrémité du câble électrique blindé (6).

3. Procédé pour traiter une extrémité d'un câble électrique comprenant les étapes consistant à :
fournir un câble électrique blindé (6) en tant que câble électrique haute tension à deux âmes réalisé en recouvrant d'une tresse conductrice (9) deux câbles électriques supérieur et inférieur (10) parallèles entre eux constitués d'un câble conducteur central (10b) et d'un recouvrement isolant (10a), et en recouvrant d'un recouvrement isolant (8) en tant que couche la plus externe l'extérieur de la tresse (9) ;
ledit câble conducteur tressé (9) possède une forme ovale en coupe ;
fournir un gabarit comprenant :
une paire de parties de mâchoire (3) comportant chacune une partie mince (4) au niveau de la moitié avant et une partie large (5) au niveau de la moitié arrière, la partie mince (4) est formée de manière à être plus mince que la partie large (5) dans la direction horizontale et dans la direction verticale ;
un premier élément de déplacement (11) configuré pour déplacer dans un sens et dans l'autre la paire de parties de mâchoire (3) ;
un premier élément de déplacement (11) configuré pour déplacer dans un sens et dans l'autre la paire de parties de mâchoire (3) ;
ledit premier élément de déplacement (11) est configuré pour déplacer dans un sens et dans l'autre la paire de parties de mâchoire (3) de façon à insérer les parties minces (4) dans des espaces en forme de triangle (18) formés entre la face externe du recouvrement isolant (10a) et la face interne de la tresse extérieure (9) entre les câbles de la paire supérieure et inférieure de câbles électriques (10) du câble électrique blindé (6),
le recouvrement isolant (8) comporte une fente (7) dans la direction longitudinale d'un câble électrique blindé (6) ;
un élément d'ouverture (12) est configuré pour ouvrir la paire de parties de mâchoire (3) tandis que les parties minces (4) sont insérées dans lesdits espaces en forme de triangle (18) ; et
un deuxième élément de déplacement (13) est configuré pour déplacer dans un sens et dans l'autre la paire de parties de mâchoire (3) de façon à insérer les parties minces (4) et les parties larges (5) à l'intérieur d'une tresse (9) du câble électrique blindé (6),
dans lequel le premier élément de déplacement (11) comporte :
un premier levier basculant (31) ;
une paire de plaques de liaison (24) liée au premier levier basculant (31) au moyen d'un élément de liaison (29) et à laquelle est fixée la paire de parties de mâchoire (3) ; et
un élément de guidage (27) supportant de façon mobile dans un sens et dans l'autre la paire de plaques de liaison (24), et
le deuxième élément de déplacement (13) comporte :
un second levier basculant (35) ; et
un bloc mobile (34) lié au second levier basculant (35) et à l'élément de guidage (27) et supportant le premier levier basculant (31), dans lequel
l'élément d'ouverture (12) comporte :
une paire de longs trous (40) prévue sur la paire de plaques de liaison (24) ;
une paire de premières broches (41) disposée du côté de l'élément de guidage (27) et en prise de manière coulissante avec la paire de longs trous (40) ; et
une paire de secondes broches (30) disposée plus à l'intérieur que la paire de premières broches (41) et liant l'élément de liaison (29) avec la paire de plaques de liaison (24) ;
ouvrir le recouvrement isolant (8) en insérant une paire des parties minces (4) dans les espaces en forme de triangle (18) et en ouvrant la paire de parties de mâchoire (3) ;
dénuder le recouvrement isolant ouvert (8) le long de la fente (7) dans la direction longitudinale ;
agrandir la tresse (9) en insérant les parties larges (5) à l'intérieur d'une extrémité de la tresse du câble électrique blindé (6) ; et dans ces conditions,
envelopper la tresse (9) au moyen d'un ruban depuis l'extérieur des parties larges (5).
